# EUROPEAN PATENT APPLICATION

(11) **EP 2 060 381 A1**
(43) Date of publication of application: **20.05.2009**
(21) Application number: 08163131.9
(22) Date of filing: 28.08.2008
(51) Int. Cl.: B29C 45/14, B29B 17/02

(54) **Article made of biodegradable resin and method of making the same**

(30) Priority: 13.11.2007 JP 2007294889
(71) Applicant: Fujitsu Limited, Kawasaki-shi, Kanagawa 211-8588 (JP)
(72) Inventor: Yui, Yasushi, Kawasaki-shi, Kanagawa 211-8588 (JP)
(74) Representative: Stebbing, Timothy Charles

(57) **Abstract**

An environmentally-friendly casing for electronic devices. An article has a body (21) made of a biodegradable resin. A heat insulating material (22) covers the surface of the body. A resin adhesive (23) is interposed between the body (21) and the heat insulating material (22). Heat insulation is achieved with such a simplified structure. A heating process is employed to melt the resin adhesive (23), for example. The heat insulating material(22) can thus easily be detached from the surface of the body (21). Since the body is made of a biodegradable resin, the body is easily degraded in soil, for example. No waste is generated. When the body is incinerated for thermal recycling, for example, emission of carbon-dioxide is reduced to half an amount of the case where a petroleum resin is incinerated, reducing the impact on the environment.

## Description

The present invention relates to an article made of resin often utilized as the enclosure of an electronic apparatus such as a notebook personal computer, a cellular or mobile phone terminal, or the like.

A notebook personal computer includes an enclosure. The enclosure is made of a petroleum resin such as acrylonitrile butadiene styrene (ABS), polycarbonate (PC), or the like. A molding process is employed to form the enclosure. Heat generating elements such as a hard disk drive (HDD), a motherboard, and the like are incorporated in an inner space defined in the enclosure. Heat radiated from the heat generating elements is transferred to the enclosure.

A petroleum resin has relatively low heat conductivity. However, a notebook personal computer can often be utilized on the lap of a user, for example. Heat is inevitably transferred from the enclosure to the body of the user. The user feels discomfort because of the heat. In addition, when the enclosure made of a petroleum resin is incinerated for thermal recycling, for example, a large amount of carbon-dioxide is emitted, which impacts the environment.

It is accordingly desirable to provide an article made of a biodegradable resin, and a method of making the same, capable of achieving a function of heat insulation with a simplified structure and contributing to less deterioration of the environment.

According to a first aspect of the present invention, there is provided an article comprising: a body made of a biodegradable resin; a heat insulating material covering the surface of the body; and a resin adhesive interposed between the body and the heat insulating material.

The article allows the surface of the body to be covered with the heat insulating material. Heat insulation is achieved with such a simplified structure. A heating process is employed to melt the resin adhesive, for example. The heat insulating material can thus easily be detached from the surface of the body. Since the body is made of a biodegradable resin, the body is easily degraded in soil, for example. No waste is generated. When the body is incinerated for thermal recycling, for example, emission of carbon-dioxide is reduced to half an amount of the case where a petroleum resin is incinerated, which is more environmentally friendly.

A specific method is provided to produce such an article. The method of making an article may comprise covering a body made of a biodegradable resin in a predetermined shape with a resin adhesive so that a heat insulating material is bonded to the surface of the body. The method serves to provide an article capable of achieving a function of heat insulation with a simplified structure and with less impact on the environment.

The article may further comprise a paint film interposed between the body and the resin adhesive, the paint film being made of a primer paint. The paint film serves to enhance the bonding strength between the resin adhesive and the heat insulating material in the article.

A specific method is provided to produce such an article. The method of making an article comprises: applying a primer paint to the surface of a body made of a biodegradable resin in a predetermined shape so as to form a paint film covering over the surface of the body; and covering the surface of the paint film with a resin adhesive so that a heat insulatingmaterial is bonded to the surface of the paint film. The method serves to provide an article capable of achieving a function of heat insulation with a simplified structure and more environmentally-friendly in the same manner as described above.

In the article, the aforementioned resin adhesive may be made of at least one of an acrylic adhesive, an epoxy adhesive and a silicone adhesive. The resin adhesive serves to bond the heat insulating material to the surface of the body with a high bonding strength. Unintentional detachment of the heat insulating material is thus prevented. The heat insulating material is allowed to achieve an excellent heat insulation performance. It should be noted that a double-sided adhesive tape may be replaced with the resin adhesive, for example.

According to a second aspect of the present invention, there is provided an article comprising: a body made of a biodegradable resin; a metal plate covering over the surface of the body; a resin adhesive interposed between the body and the metal plate; and a heat insulating material bonded to the surface of the metal plate.

The article allows the resin adhesive to be interposed between the body and the metal plate. The body and the metal plate are united together with a sufficient bonding strength. Unintentional detachment of the metal plate is thus prevented. The metal plate serves to improve the rigidity of the article. Moreover, a heating process is employed to melt the resin adhesive, for example. The metal plate and the heat insulating material can thus easily be detached from the surface of the body. Since the body is made of a biodegradable resin, the body is easily degraded in soil, for example. No waste is generated. When the body is incinerated for thermal recycle, for example, emission of carbon-dioxide is reduced to half an amount of the case where a petroleum resin is incinerated. This results in less deterioration of the environment. It should be noted that a double-sided adhesive tape may be replaced with the resin adhesive, for example.

A specific method is provided to produce such an article. The method of making an article comprises: setting a metal plate in a predetermined shape within a cavity defined in a mold, a resin adhesive being applied to the surface of the metal plate; forming a body in a predetermined shape by curing a biodegradable resin in a fluid state poured into the cavity, the body being united with the metal plate; and bonding a heat insulting element to the surface of the metal plate at the opposite side to the body after the body and the metal plate are taken out of the cavity. The method serves to provide an article capable of achieving a function of heat insulation with a simplified structure and less impact on the environment.

The article may further comprise a paint film interposed between the metal plate and the heat insulating material, the paint film being made of a primer paint. The paint film allows the adhesive and the heat insulating material to be bonded with a higher bonding strength.

A specific method is provided to produce such an article. The method of making an article comprises: setting a metal plate in a predetermined shape within a cavity defined in a mold, a resin adhesive being applied to the surface of the metal plate; forming a body in a predetermined shape by curing a biodegradable resin in a fluid state poured into the cavity, while the body is united with the metal plate; applying a primer paint to the surface of the metal plate at the opposite side of the body after the body and the metal plate are taken out of the cavity so as to form a paint film covering over the surface of the metal plate; and bonding a heat insulating material to the surface of the paint film. The method has the same effects as above.

In the article, the aforementioned resin adhesive may be made of at least one of an acrylic adhesive, an epoxy adhesive and a silicone adhesive. The resin adhesive serves to bond the metal element to the surface of the body with a high bonding strength. Unintentional detachment of the metal plate is prevented. It should be noted that a double-sided adhesive tape may replaced with the resin adhesive, for example.

The above and other features and advantages of the present invention will become apparent from the following description of the preferred embodiments in conjunction with the accompanying drawings, wherein:
Fig. 1 is a perspective view schematically illustrating a notebook personal computer as an example of an electronic apparatus;
Fig. 2 is an enlarged partial sectional view schematically illustrating a molded article according to a first embodiment of the present invention;
Fig. 3 is an enlarged partial sectional view schematically illustrating a molded article according to a second embodiment of the present invention;
Fig. 4 is an enlarged partial sectional view schematically illustrating a molded article according to a third embodiment of the present invention;
Fig. 5 is an enlarged partial sectional view schematically illustrating a metal plate set in a mold; and
Fig. 6 is an enlarged partial sectional view schematically illustrating a molded article according to a fourth embodiment of the present invention.

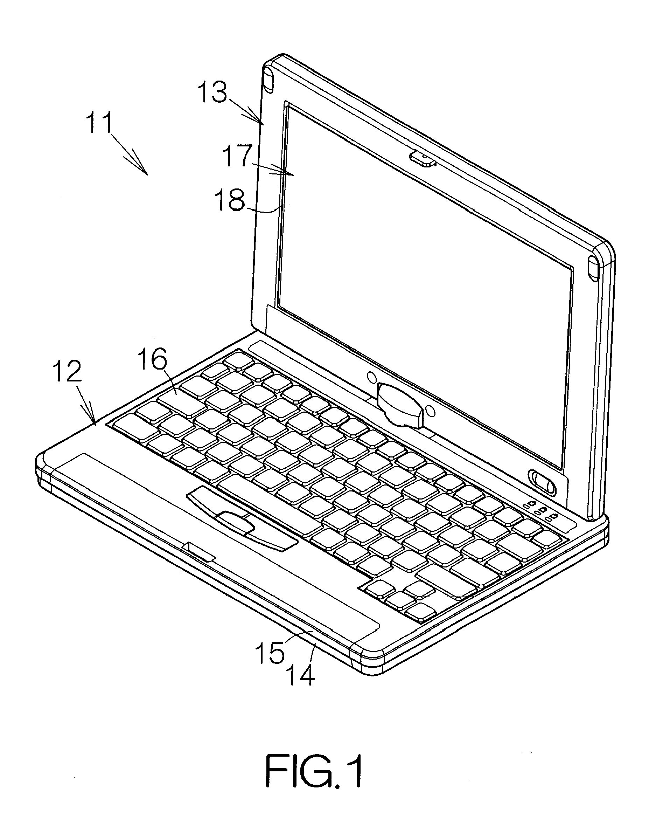

Fig. 1 schematically illustrates a notebook personal computer 11 as a specific example of an electronic apparatus according to the present invention. The notebook personal computer 11 includes a thin main enclosure 12 and a display enclosure 13. The display enclosure 13 is coupled to the main enclosure 12 for relative swinging or pivotal movement. The main enclosure 12 includes a molded article made of a biodegradable resin, namely a base 14, and a cover 15 removably coupled to the base 14. An input device such as a keyboard 16 is embedded in the front surface of the cover 15. Users manipulate the keyboard 16 to input commands and/or data.

A liquid crystal display (LCD) panel module 17 is incorporated in the display enclosure 13, for example. The screen of the LCD panel module 17 gets exposed in a window opening 18 defined in the display enclosure 13. Text data and graphics appear on the screen. Users can see the ongoing operation of the notebook personal computer 11 based on the appearing text data and graphics. The display enclosure 13 can be superposed on the main enclosure 12 through the pivotal movement relative to the main enclosure 12.

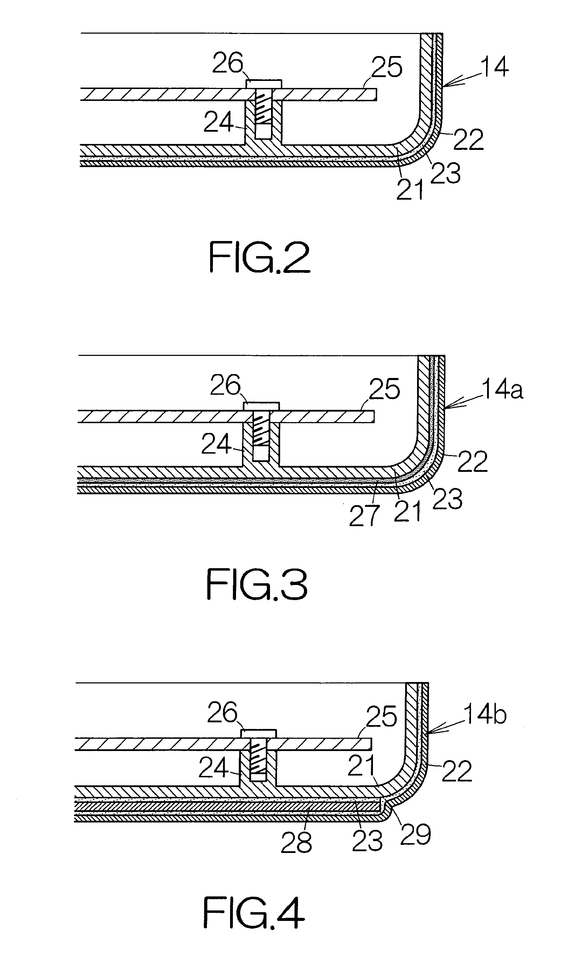

Fig. 2 schematically illustrates the cross-section of the base 14 according to a first embodiment of the present invention. The base 14 includes a body 21. The body 21 is made of a biodegradable resin. Polylactic acid, cellulose acetate, cellulose polyacetate, or the like, is utilized as the biodegradable resin. The back surface or inner surface of the body 21 faces an inner space (interior) defined in the main enclosure 12.

A heat insulating material 22 covers the front surface or outer surface of the body 21. The heat insulating material 22 is made of skin, rubber, elastomer, cloth, paper, resin, or the like. These materials are made of petroleum, oil, grease, mineral, plant, an inorganic material, an organic material, a biodegradable material, or the like. The thickness of the heat insulating material 22 is set within a range approximately between 0.1 [µm] and 50 [µm], for example. The thickness of the heat insulating material 22 may preferably be set at 10 [µm] or more, for example.

An adhesive 23 is interposed between the body 21 and the heat insulating material 22 so that the heat insulating material 22 is bonded to the front surface of the body 21. A resin adhesive such as an acrylic adhesive, an epoxy adhesive or a silicone adhesive may be utilized as the adhesive 23, for example. Here, the adhesive 23 is interposed uniformly all over between the body 21 and the heat insulating material 22. A high bonding strength is established between the heat insulating material 22 and the outer surface of the body 21.

A boss 24 is defined in the inner surface of the body 21, for example. A printed wiring board 25 of a motherboard is received on the boss 24, for example. A screw 26 is screwed into the boss 24 so that the printed wiring board 25 is fixed to the body 21. Electronic components, not shown, such as a central processing unit (CPU) chip and a graphic chip are mounted on the surface of the printed wiring board 25, for example. The electronic components generate heat during operation.

In the base 14, the front surface of the body 21 is covered with the heat insulating material 22. Heat (a temperature rise) of approximately 0.1 degrees Celsius to 15 degrees Celsius is thus insulated (suppressed) depending on the thickness and the material of the heat insulating material 22. Heat radiated from the electronic components is kept inside the interior of the main enclosure 12. Heat insulation is established with a simplified structure. A fan, not shown, is utilized to discharge the heat into the outside through the side surface of the main enclosure 12, for example. Even when the notebook personal computer 11 is utilized on the lap of a user, heat transfer to the user is suppressed. The user can use the notebook personal computer 11 with less discomfort.

A heating process is employed to melt the adhesive 23, for example. The heat insulating material 22 is thus easily detached from the outer surface of the body 21. A dryer or an oven is utilized for the heating process, for example. Since the body 21 is made of a biodegradable resin, the body 21 is easily degraded in soil. No waste is generated. When the body 21 is incinerated for thermal recycling, for example, emission of carbon-dioxide is reduced to approximately half an amount of the case where a petroleum resin is incinerated. This results in less deterioration of the environment.

A resin adhesive such as an acrylic adhesive, an epoxy adhesive or a silicone adhesive is utilized to bond the heat insulating material 22, for example. The heat insulating material 22 is thus bonded to the outer surface of the body 21 with a high bonding strength. Unintentional detachment of the heat insulating material 22 is prevented. The heat insulating material 22 is allowed to achieve an excellent heat insulation performance. A double-sided adhesive tape may be utilized as the adhesive 23 in place of a resin adhesive, for example.

Next, description will be made on a method of making the base 14. A mold is first prepared for forming the body 21. A biodegradable resin, melted from pellets, for example, is poured into the mold. A cooling process is applied to the biodegradable resin within the mold. The biodegradable resin is thus hardened or cured. The biodegradable resin is then taken out of the mold. The adhesive 23 is applied to the outer surface of the body 21. The heat insulating material 22 is then bonded to the outer surface of the body 21. The base 14 is in this manner produced.

Fig. 3 schematically illustrates the cross-section of a base 14a according to a second embodiment of the present invention. In the base 14a, a paint film 27 is interposed between the body 21 and the adhesive 23. A primer paint such as an acrylic paint, an urethane paint, a polyester paint or an epoxy paint is utilized as the paint film 27, for example. The thickness of the paint film 27 is set within a range approximately between 0.1 [µm] to 50 [µm], for example. The thickness of the paint film 27 may be preferably set at 10 [µm] or more, for example. Like reference numerals are attached to the structure or components equivalent to those of the aforementioned base 14.

In the base 14a, the paint film 27 serves to enhance the bonding strength between the adhesive 23 and the heat insulating material 22. Moreover, the heat insulating material 22 can easily be detached from the outer surface of the body 21 in the same manner as described above. The heat insulating material 22 serves to suppress heat transfer to a user. The body 21 is easily degraded in soil, for example. No waste is generated. When the body 21 is incinerated for thermal recycle, for example, emission of carbon-dioxide is reduced to approximately half an amount of the case where a petroleum resin is incinerated, with less impact on the environment.

Next, description will be made of a method of making the base 14a. The body 21 is molded in the same manner as described above. A primer paint is applied to the outer surface of the body 21. Spraying may be employed for the application of a primer paint, for example. A primer paint is sprayed on the outer surface of the body 21. The paint film 27 is in this manner formed on the outer surface of the body 21. The adhesive 23 is applied to the surface of the paint film 27. The heat insulating material 22 is then bonded to the surface of the paint film 27. The base 14a is in this manner produced.

Fig. 4 schematically illustrates the cross-section of a base 14b according to a third embodiment of the present invention. The base 14b includes a metal plate 28 bonded to the outer surface of the body 21. The metal plate 28 may be made of one of aluminium, copper, nickel, chromium, cobalt, zinc, titanium, magnesium, tin, gold, silver, platinum, and a platinum group metal, or made of a metal alloy containing any of these metallic materials, for example. The thickness of the metal plate 28 is set at 5 [mm] or smaller, for example.

Here, the extent of the metal plate 28 is set smaller than that of the body 21, for example. Specifically, the contour of the metal plate 28 is located inside the contour of the body 21. The aforementioned adhesive 23 is utilized to bond the metal plate 28 to the body 21. The aforementioned heat insulating material 22 is bonded to the front surface or outer surface of the metal plate 28. The heat insulating material 22 is bonded to the outer surface of the body 21 outside the contour of the metal plate 28. An adhesive 29 is utilized for the bonding. The adhesive 29 is a substance identical to the adhesive 23. Like reference numerals are attached to the structure or components equivalent to those of the aforementioned base 14.

In the base 14b, the adhesives 23, 29 are utilized to bond the body 21, the metal plate 28 and the heat insulating material 22 to one another. The body 21, the metal plate 28 and the heat insulating material 22 are thus united together with a sufficient bonding strength. Unintentional detachment of the metal plate 28 and the heat insulating material 22 is prevented. The heat insulating material 22 is thus allowed to achieve an excellent heat insulation performance. In addition, the metal plate 28 serves to improve the rigidity of the base 14b. It should be noted that a double-sided adhesive tape may be utilized as the adhesive 23 and/or the adhesive 29 in place of a resin adhesive, for example.

The contour of the metal plate 28 is set smaller than that of the body 21. The metal plate 28 serves to improve the rigidity of a part of the base 14b. A through hole and/or depression can easily be formed outside the contour of the metal plate 28, for example. The base 14b can thus be designed in various shapes. Alternatively, a through hole and/or depression may be formed in the metal plate 28. The base 14b can thus be designed in widely various shapes.

The metal plate 28 and the heat insulating material 22 can easily be detached from the front surface of the base 14b by heating process, for example. A dryer or an oven is utilized for the heating process, for example. The heat insulating material 22 serves to suppress heat transfer to a user. The body 21 is easily degraded in soil, for example. No waste is generated. When the body 21 is incinerated for thermal recycle, for example, emission of carbon-dioxide is reduced to approximately half an amount of the case where a petroleum resin is incinerated, helping to preserve the environment.

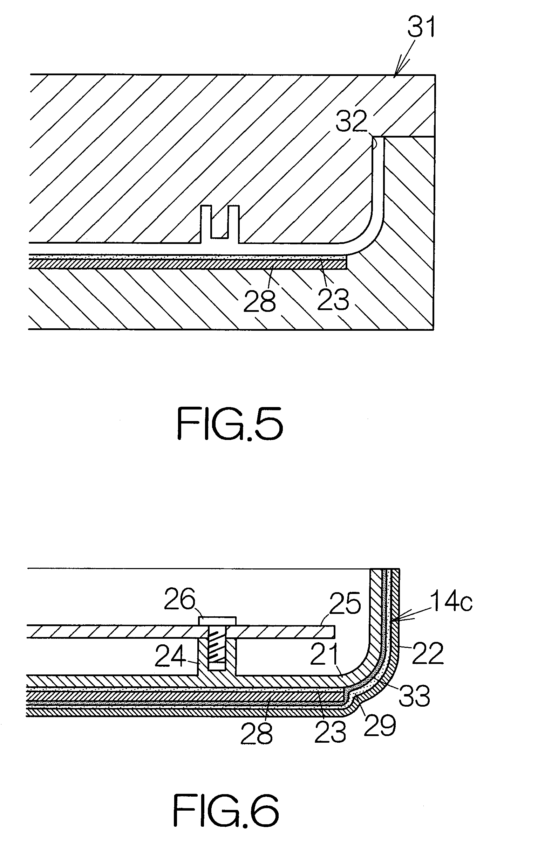

Next, description will be made on a method of making the base 14b. As shown in Fig. 5, a mold 31 is prepared. The metal plate 28 has been set in a cavity 32 formed in the mold 31. The adhesive 23 is applied to the back surface or inner surface of the metal plate 28. A biodegradable resin in a fluid state is poured into the cavity 32. Cooling process is applied to the biodegradable resin within the mold 31. The biodegradable resin is thus hardened or cured. The biodegradable resin is then taken out of the mold 31. The adhesive 29 is applied to the outer surface of the body 21 and the outer surface of the metal plate 28. The heat insulating material 22 is then bonded to the outer surface of the body 21 and the outer surface of the metal plate 28. The base 14b is in this manner produced.

Fig. 6 schematically illustrates the cross-section of a base 14c according to a fourth embodiment of the present invention. In the base 14c, a paint film 33 is interposed between the metal plate 28 and adhesive 29 of the aforementioned base 14b. The paint film 33 is interposed between the outer surface of the body 21 and the adhesive 29 outside the contour of the metal plate 28. The paint film 33 is a substance identical to the aforementioned paint film 27. Like reference numerals are attached to the structure or components equivalent to those of the aforementioned base 14b.

In the base 14c, the body 21, the metal plate 28 and the heat insulating material 22 are united together with a higher bonding strength. The base 14c is allowed to enjoy the advantages identical to those obtained in the aforementioned embodiments. A primer paint may be applied to the body 21 and the metal plate 28 for producing the base 14c. The paint film 33 may be formed in the same manner as the aforementioned paint film 27. The adhesive 29 is then applied to the surface of the paint film 33. The heating insulating material 22 is thus bonded to the surface of the paint film 33. The base 14c is in this manner produced.

The molded article made of a biodegradable resin according to the present invention may be applied to the cover 15 and/or the display enclosure 13. The molded article made of a biodegradable resin according to the present invention can be applied to various purposes including the enclosure of an electronic device such as a mobile phone terminal or a personal digital assistant (PDA), a component of an automobile, a building material, a component of a home appliance, an electrode of a fuel cell, a catalyst, or the like.

## Claims

1. An article comprising:
a body made of a biodegradable resin;
a heat insulating material covering over a surface of the body; and
a resin adhesive interposed between the body and the heat insulating material.

2. The article according to claim 1, further comprising a paint film interposed between the body and the resin adhesive, the paint film being made of a primer paint.

3. The article according to claim 1 or 2, wherein the resin adhesive is made of at least one of an acrylic adhesive, an epoxy adhesive and a silicone adhesive.

4. An article comprising:
a body made of a biodegradable resin;
a metal plate covering over a surface of the body;
a resin adhesive interposed between the body and the metal plate; and
a heat insulating material bonded to a surface of the metal plate.

5. The article according to claim 4, further comprising a paint film interposed between the metal plate and the heat insulating material, the paint film being made of a primer paint.

6. The article according to claim 4 or 5, wherein the resin adhesive is made of at least one of an acrylic adhesive, an epoxy adhesive and a silicone adhesive.

7. A method of making an article, comprising covering a body made of a biodegradable resin in a predetermined shape with a resin adhesive so that a heat insulating material is bonded to a surface of the body.

8. A method of making an article, comprising:
applying a primer paint to a surface of a body made of a biodegradable resin in a predetermined shape so as to form a paint film covering over the surface of the body; and
covering a surface of the paint film with a resin adhesive so that a heat insulating material is bonded to the surface of the paint film.

9. A method of making an article, comprising:
setting a metal plate in a predetermined shape within a cavity defined in a mold, a resin adhesive applied to a surface of the metal plate;
forming a body in a predetermined shape by curing a biodegradable resin in a fluid state poured into the cavity, the body united with the metal plate; and
bonding a heat insulting element to the surface of the metal plate at an opposite side to the body after the body and the metal plate are taken out of the cavity.

10. A method of making an article, comprising:
setting a metal plate in a predetermined shape within a cavity defined in a mold, a resin adhesive applied to a surface of the metal plate;
forming a body in a predetermined shape by curing a biodegradable resin in a fluid state poured into the cavity, the body united with the metal plate;
applying a primer paint to the surface of the metal plate at an opposite side of the body after the body and the metal plate are taken out of the cavity so as to form a paint film covering over the surface of the metal plate; and
bonding a heat insulating material to a surface of the paint film.
